# EUROPÄISCHE PATENTSCHRIFT

(11) **EP 3 440 286 B1**
(45) Veröffentlichungstag und Bekanntmachung des Hinweises auf die Patenterteilung: **03.06.2020**
(21) Anmeldenummer: 17716526.3
(22) Anmeldetag: 07.04.2017
(51) Int. Cl.: E04G 11/38, A62B 35/00, E04G 21/32

(54) **SICHERUNGSSÄULE**
SAFETY POST
COLONNE DE FIXATION

(30) Priorität: 08.04.2016 DE 102016106533
(43) Veröffentlichungstag der Anmeldung: 13.02.2019
(73) Patentinhaber: Peri GmbH, 89264 Weissenhorn (DE)
(72) Erfinder: KELLER, Martin, 74078 Heilbronn (DE); BORNACK, Martin, 74395 Mundelsheim (DE)
(74) Vertreter: K & H Bonapat Patentanwälte Koch · von Behren & Partner mbB
(86) Internationale Anmeldenummer: PCT/EP2017/058464
(87) Internationale Veröffentlichungsnummer: WO 2017/174808

(56) Entgegenhaltungen:
- WO-A1-2012/021505
- US-A- 5 029 670
- US-B1- 6 173 809
- US-B1- 6 962 234

## Beschreibung

### Technisches Gebiet

Die vorliegende Erfindung betrifft eine Sicherungsvorrichtung zum Sichern einer Person an einem Bodenpaneel eines Schalungssystems. Ferner betrifft die vorliegende Erfindung ein Schalungssystem, sowie ein Verfahren zum Sichern einer Person an einem Bodenpaneel eines Schalungssystems mit einer Sicherungsvorrichtung.

### Hintergrund der Erfindung

Schalungssysteme werden eingesetzt, um Gebäude oder andere Bauten in Betonbauweise zu fertigen. Dabei bilden die Schalungssysteme die Form aus, in welcher flüssiger Beton eingegossen wird und anschließend ausgehärtet werden kann.

Um Schalungssysteme mehrfach zu verwenden, sind diese modular bzw. als Baukastenprinzip konstruiert. So können beispielsweise Schalungsbretter oder Bodenpaneele in einem Stecksystem flexibel an verschiedene Formen angepasst werden. Insbesondere kann mit Schalungssystemen eine horizontale Wand bzw. ein Boden/Decke mit Beton gegossen werden. Hierzu werden Bodenpaneele an Stützen angebracht, wobei die Bodenpaneele die Fläche bilden, auf welcher Beton gegossen und ausgehärtet werden kann, um einen Decke, zum beispielsweise eine Etagendecke, auszubilden.

In Rohbauten aus Beton werden große Höhen erreicht, wobei nacheinander Etage für Etage mit Beton gegossen werden. Auf einer gefertigten Betondecke wird für die nächste darüber liegende Betondecke das Schalungssystem neu aufgebaut. Die Monteure des Schalungssystems bewegen sich anschließend beim Gießen des Betons auf dem Bodenpaneel zum Teil in sehr großen Höhen. In diesen Bereichen ist ein hohes Absturzrisiko der Monteure gegeben.

In US 5,029,670 A ist ein entfernbares Sicherheitssystem für Bauarbeiter beschrieben, das an einem I-Träger montiert ist, der einen Kabelhandgriff bereitstellt, an dem eine Sicherheitsleine befestigt werden kann. Die Enden des Kabels werden durch eine spezielle Vorrichtung abgeschlossen, die den Halt der Vorrichtung auf dem Träger erhöht, wenn eine Last aufgebracht wird. Das Sicherheitssystem kann am I-Träger in Bodennähe installiert und mit dem I-Träger angehoben werden, wenn es zur Befestigung an einem Gebäude oder einer Brücke positioniert ist. In US 6,173,809 B1 eine Sicherheitsstütze zum Tragen eines Sicherheitskabels beschrieben. Die Sicherheitsstütze umfasst einen sich verjüngenden rohrförmigen Pfosten mit einem unteren Ende zur Befestigung an einer Trägerbasis in einem schrägen Winkel und einem oberen Ende zum Tragen des Sicherheitskabels. Der Pfosten hat vorzugsweise eine Wandstärke von weniger als 0,125 Zoll, ist kegelstumpfförmig und besteht aus einem energieabsorbierenden, elastikartigen Stahl wie Stahl der Güteklasse A595, der im Zusammenwirken mit der Wandstärke des Pfostens eine sich verjüngende, vorzugsweise kegelstumpfförmige Form hat. In US 6,962,234 B1 ist eine Verankerungssicherung für Stahlarbeiter beschrieben. Die Sicherheitsvorrichtung ist so konfiguriert, dass sie verschiebbar mit einem angeflanschten Strukturträger verbunden werden kann, an dem ein Verbindungsmittel angebracht werden kann, um einen Arbeiter gegen einen Sturz zu sichern. Die Verankerungsvorrichtung umfasst ein längliches Querelement mit einer Vielzahl von Öffnungen, die dadurch ausgebildet sind, um eine Einstellung der Verankerungsvorrichtung zu ermöglichen, um verschiedene Träger aufzunehmen; eine Lanyard-Befestigungsvorrichtung, die an der Mitte des Querträgers angebracht ist, um einen Clip eines Lanyards eines Arbeiters aufzunehmen; und gegenüberliegende erste und zweite Klemmen zum Koppeln der Vorrichtung an den Flansch eines Trägers. Die Klammern umfassen eine Sperrklinke mit ersten und zweiten Zähnen zum selektiven Eingriff in die Querelementöffnungen. In WO 2012/021505 A1, das die Merkmale des einleitenden Teils des Anspruchs 1 offenbart, ist ein Verbinder zum Verbinden mit einem Verlängerungselement beschrieben, der ein Schnittstellenelement umfasst. Das Schnittstellenelement umfasst eine Schnittstellenoberfläche, ein erstes sich erstreckendes Anschlagelement, das sich von einer der Schnittstellenoberfläche gegenüberliegenden Oberfläche erstreckt, ein zweites sich erstreckendes Anschlagelement, das von dem ersten sich erstreckendes Anschlagelement beabstandet ist und sich von der der Schnittstellenoberfläche gegenüberliegenden Oberfläche erstreckt, und mindestens einen ersten Durchgang, der von der Schnittstellenoberfläche zu der Oberfläche führt, die der Schnittstellenoberfläche zwischen dem ersten sich erstreckenden Anschlagelement und dem zweiten sich erstreckenden Anschlagelement gegenüberliegt. Der Verbinder umfasst ferner ein Anschlagelement mit mindestens einem ersten Gewindedurchgang und mindestens einem ersten Gewindeteil, die sich durch den ersten Durchgang in der Schnittstellenoberfläche erstrecken, um in den ersten Gewindedurchgang des Anschlagelements auf der Seite der Oberfläche gegenüber der Schnittstellenoberfläche einzugreifen. Der Verbinder umfasst ferner ein erstes sich erstreckendes Kontaktelement, das einen ersten zusammenwirkenden Abschnitt und eine erste Kontaktfläche an einem Ende davon umfasst. Der erste zusammenwirkende Abschnitt ist beweglich zwischen dem Anschlagelement und dem ersten sich erstreckenden Anschlagelement positioniert und liegt daran an, so dass die erste Kontaktfläche des ersten sich erstreckenden Kontaktelements zwischen einer offenen Position und einer geschlossenen Position als Abstand zwischen der Oberfläche bewegt werden kann, die der Schnittstellenfläche gegenüberliegt, und das Anschlagelement über das erste Gewindeelement eingestellt wird. Der Verbinder umfasst auch ein zweites sich erstreckendes Kontaktelement, das einen zweiten zusammenwirkenden Abschnitt und eine zweite Kontaktfläche an einem Ende davon umfasst. Der zweite zusammenwirkende Abschnitt ist beweglich zwischen dem Anschlagelement und dem zweiten sich erstreckenden Anschlagelement positioniert und liegt daran an, so dass die zweite Kontaktfläche des zweiten sich erstreckenden Kontaktelements zwischen einer offenen Position und einer geschlossenen Position als Abstand zwischen der Oberfläche bewegt werden kann, die der Schnittstellenfläche gegenüberliegt, und das Anschlagelement über das erste Gewindeelement eingestellt wird.

### Darstellung der Erfindung

Es ist eine Aufgabe der vorliegenden Erfindung, eine flexibel einsetzbare Sicherungsvorrichtung zu schaffen, um das Absturzrisiko der Monteure im Schalungsbau zu reduzieren.

Diese Aufgabe wird mit einer Sicherungsvorrichtung zum Sichern einer Person an einem Bodenpaneel eines Schalungssystems, eines Schalungssystems und eines Verfahrens zum Sichern einer Person an einem Bodenpaneel eines Schalungssystems mit einer Sicherungsvorrichtung gemäß den unabhängigen Ansprüchen gelöst.

Gemäß eines ersten Aspekts der vorliegenden Erfindung wird eine Sicherungsvorrichtung zum Sichern einer Person an einem Bodenpaneel (bzw. Deckenpaneel) eines Schalungssystems beschrieben. Die Sicherungsvorrichtung weist eine Sicherungssäule und ein Standfußelement auf, welches an der Sicherungssäule befestigt ist. Das Standfußelement ist auf einem Bodenpaneel eines Schalungssystems auflegbar, wobei die Sicherungssäule ein Personensicherungselement aufweist, an welchem die Person selektiv befestigbar ist. Die Sicherungsvorrichtung weist ferner einen Befestigungsmechanismus auf, welcher einen Befestigungsträger aufweist, an welchem zumindest ein Einklinkelement (z.B. ein Befestigungshaken) angeordnet ist. Der Befestigungsträger ist an bzw. mit dem Standfußelement gekoppelt, wobei das Einklinkelement in eine Sicherungsposition und eine Freigabeposition einstellbar ist. Das Einklinkelement ist in der Sicherungsposition mit dem Schalungssystem einklinkbar, um das Standfußelement auf dem Bodenpaneel zu fixieren. Das Einklinkelement ist in der Freigabeposition von dem Schalungssystem entkoppelbar, um das Standfußelement von dem Bodenpaneel zu entkoppeln. Erfindungsgemäß ist das Einklinkelement um eine erste Drehachse schwenkbar an dem Befestigungsträger befestigt. Das Einklinkelement kann somit zwischen der Sicherungsposition und der Freigabeposition schwenken. Erfindungsgemäß weist der Befestigungsmechanismus ferner einen Koppelhebel auf, welcher um eine zweite Drehachse an der Sicherungssäule drehbar befestigt ist und um eine dritte Drehachse, welche beabstandet zu der ersten Drehachse ausgebildet ist, an dem Befestigungshaken drehbar befestigt ist, derart, dass mittels Drehens des Koppelhebels um die zweite Drehachse das Einklinkelement um die erste Drehachse drehbar ist.

Gemäß eines weiteren Aspekts der vorliegenden Erfindung wird ein Schalungssystem beschrieben. Das Schalungssystem weist ein Bodenpaneel, eine Trägervorrichtung, an welcher das Bodenpaneel befestigbar ist, und eine oben beschriebene Sicherungsvorrichtung zum Sichern einer Person an dem Bodenpaneel auf. Das Standfußelement ist auf dem Bodenpaneel aufgelegt, wobei das Einklinkelement in der Sicherungsposition an dem Schalungssystem, insbesondere an der Trägervorrichtung, eingeklinkt ist, um die Sicherungssäule auf dem Bodenpaneel zu fixieren.

Gemäß eines weiteren Aspekts der vorliegenden Erfindung wird ein Verfahren zum Sichern einer Person an einem Bodenpaneel eines Schalungssystems mit einer oben beschriebenen Sicherungsvorrichtung beschrieben. Gemäß dem Verfahren wird das Standfußelement auf dem Bodenpaneel aufgelegt. Das Einklinkelement wird in die Sicherungsposition eingestellt mittels Einklinkens des Einklinkelements mit dem Schalungssystem, um das Standfußelement auf dem Bodenpaneel zu fixieren. Das Einklinkelement wird in die Freigabeposition eingestellt mittels Entkoppelns des Einklinkelements von dem Schalungssystem, um das Standfußelement von dem Bodenpaneel zu lösen.

Das Schalungssystem dient zum Bilden einer Form zum Gießen von Betonwänden und insbesondere von Betondecken. Das Schalungssystem als Deckenschalungssytem weist dabei insbesondere eine Trägervorrichtung auf, an welcher Bodenpaneele befestigbar sind. Die Trägervorrichtung ist dabei derart ausgebildet, dass diese schnell und einfach auf und abgebaut werden kann und sich zusätzlich an unterschiedliche Flächenformen anpassen kann. Beispielsweise besteht das Schalungssystem aus einer Trägervorrichtung, welche beispielsweise Querträger aufweist, auf welchen die Bodenpaneele (bzw. Deckenpaneele) aufgelegt werden können. Die Querträger werden beispielsweise über Bodenstützen (bzw. Deckenstützen) in einer gewünschten Höhe gehalten. Zwischen den Bodenpaneelen können an den Stützen Trägerprofile angeordnet werden. Die Stützen werden jeweils mit einem definierten Rastermaß verteilt aufgestellt. Die Trägerprofile weisen beispielsweise sogenannte Konsolenköpfe bzw. Stützenköpfe auf, in welchem Traverse (Querträger) eingelegt werden, auf welchen wiederum die Bodenpaneele (Tafeln, Verschalungselemente) aufgelegt werden können. Die Trägerprofile sind dabei insbesondere derart ausgebildet, dass sich das Einklinkelement der Sicherungsvorrichtung darin verklinkt bzw. einhakt. Das Trägerprofil ist dabei insbesondere ein Hohlprofil (Vierkant-Hohlprofil), ein T-Profil, ein Doppel-T-Profil, ein I-Profil und/oder ein U-Profil.

Auf dem Bodenpaneel kann der Monteur sich fortbewegen. Gleichzeitig dienen die Bodenpaneele als Teil der Gussform für den Beton. Nach Aushärten des Betons können die Bodenpaneele in einfacher Art und Weise demontiert werden.

Zur Sicherung des Monteurs während des Montierens der Bodenpaneele wird die Sicherungsvorrichtung an gewünschten Stellen der Schalungsvorrichtung lösbar fixiert, um damit den Monteur vor einem Absturz von dem Schalungssystem zu schützen.

Die Sicherungsvorrichtung weist eine Sicherungssäule und ein Standfußelement auf. Die Sicherungssäule ist an dem Standfußelement fixiert. Das Standfußelement liegt auf dem Bodenpaneel auf. Mittels des Befestigungsmechanismus wird das Standfußelement an dem Schalungssystem befestigt, sodass ein Umkippen der Sicherungssäule verhindert wird. Die Sicherungssäule erstreckt sich von dem Standfußelement insbesondere in vertikaler Richtung, wenn das Standfußelement auf dem Bodenpaneel aufliegt.

Die Sicherungssäule weist ferner ein Personensicherungselement auf, an welchem die Person selektiv und lösbar befestigbar ist. Das Personensicherungselement ist beispielsweise eine Öse oder ein Haken, an welchem der Monteur direkt oder mittels eines Sicherungsgeräts an der Sicherungssäule befestigt werden kann. Ferner kann das Personensicherungselement als Falldämpfer-Verbindungsmittel mit einer bestimmten Fixlänge dargestellt werden. Ebenfalls kann das Personensicherungselement einen längenverstellbaren 'Auffanggerät bzw. einen Seilkürzer aufweisen. Vorzugsweise ist das Personensicherungselement ein Höhensicherungsgerät, welches sich in der Auszugslänge individuell begrenzen lässt. Ein Verbindungsmittel, welches die Person an die Sicherungssäule befestigt, wird automatisch aufgespult und straff gehalten. Das Personensicherungselement ist insbesondere rotierbar an der Sicherungssäule angeordnet.

Die Sicherungssäule weist beispielsweise eine Längserstreckungsrichtung auf, um welche das Personensicherungselement drehbar angeordnet ist. Somit kann die Person, welche mit dem Personensicherungselement verbunden ist um die Säule laufen, wobei das Personensicherungselement mit rotiert. Die Sicherungssäule weist beispielsweise eine Länge (insbesondere zwischen Befestigungsfläche und Personensicherungselement) von 1 Meter bis 2 Meter auf. Insbesondere kann die Sicherungssäule auch zwischen 20 Zentimeter und 2,5 Meter Länge aufweisen. In einer beispielhaften Ausführungsform ist die Sicherungssäule beispielsweise teleskopartig ein- und ausfahrbar, sodass beliebige Längen der Sicherungssäule einstellbar sind.

Die Sicherungssäule kann ferner beispielsweise fangstoßdämpfend ausgeführt sein. So kann beispielsweise die Sicherungssäule ein Gummidämpfungselement aufweisen, um einen Fangstoß zu dämpfen. Ferner kann die Sicherungssäule aus einem elastischen Material, wie beispielsweise Hartgummi, hergestellt sein. Die Sicherungssäule kann auch gezielt plastisch Verformbar ausgebildet sein, sodass ein Fallstoß aufgrund einer plastischen Verformung der Scherungssäule gedämpft wird.

Ferner kann die Sicherungssäule aus einem Leichtbaumaterial, wie beispielsweise Aluminium oder Faserverbundwerkstoffen hergestellt sein, sodass eine einfache Handhabbarkeit der Sicherungsvorrichtung gewährleistet ist.

Das Standfußelement kann beispielsweise Stützen aufweisen, welche beispielsweise als Dreibein oder ähnliches ausgebildet sind. Ferner kann das Standfußelement als runde oder eckige Platte ausgebildet werden, um eine ausreichende Standstabilität zu gewährleisten. Mit anderen Worten kann das Standfußelement als Druckplatte ausgebildet werden, um eine homogene Druckverteilung und Aufnahme eines Moments bei einem Sturz des Monteurs aufzufangen.

Der Befestigungsmechanismus ist insbesondere an dem Standfußelement fixiert. Der Befestigungsträger des Befestigungsmechanismus weist das Einklinkelement auf, welcher an das Schalungssystem und insbesondere an dem oben beschriebenen Trägerprofil verhakt bzw. eingeklinkt ist. Das Einklinkelement kann beispielsweise einen Kippdübel oder einen Spreizdübel ausbilden und z.B. in entsprechenden Öffnungen der Bodenpaneele verklinkt werden. Das Einstellelement als Befestigungshaken kann beispielsweise relativ zu dem Befestigungsträger rotatorisch verschwenkt oder translatorisch verschoben werden, um zwischen der Sicherungsposition und der Freigabeposition eingestellt zu werden.

Das Einklinkelement ist in der Sicherungsposition an dem Schalungssystem eingeklinkt, derart, dass eine sichere form- und kraftschlüssige Verankerung des Standfußelements auf dem Bodenpaneel generiert wird. Insbesondere ist zwischen zwei benachbarten Bodenpaneelen ein Spalt vorgesehen, durch welchen das Einklinkelement hindurch ragen kann, um in ein unter dem Bodenpaneel vorliegendes Trägerprofil einzuhaken bzw. einzuklinken.

Das Einklinkelement ist ferner insbesondere in die Freigabeposition bewegbar, in welcher das Einklinkelement die form- und kraftschlüssige Verbindung mit dem Trägerprofil auflöst, sodass die Sicherungsvorrichtung an einen anderen gewünschten Ort deplatziert werden kann.

Mit der erfindungsgemäßen Sicherungsvorrichtung wird eine einfach handhabbare und schnell zu installierende Sicherungsvorrichtung während der Installation eines Schalungssystems, insbesondere eines Deckenschalungssystems, und während des Vergießen des Schalungssystems mit Beton. geschaffen. Nachdem der Monteur die Sicherungssäule an einer Position befestigt hat und die umliegenden Bodenpaneele verlegt hat, kann er in einfacher Art und Weise das Einklinkelement in die Freigabeposition einstellen und die Sicherungsvorrichtung an einem neuen Montageort schnell und einfach befestigen, indem er das Einklinkelement in die Sicherungsposition schiebt.

Mit der erfindungsgemäßen Sicherungsvorrichtung kann eine Positionierung in Abstimmung mit dem Arbeitsfortschritt vorgenommen werden. Ferner können auch eine Vielzahl von Sicherungsvorrichtungen auf einem entsprechenden Bodenpaneel des Schalungssystems platziert werden. Ferner können mehrere Sicherungsvorrichtungen mit einem horizontalen Spannseil als Anschlagpunkt bestückt werden, sodass beispielsweise das Spannseil das Personensicherungselement bildet, an welchen sich die Person befestigen kann. Die erfindungsgemäße Sicherungsvorrichtung wird zu Arbeitsbeginn montiert, bei Arbeitsfortschritt umgesetzt und nach Arbeitsende in einfacher und flexibler Art abgenommen.

Gemäß einer weiteren beispielhaften Ausführungsform weist das Standfußelement eine Auflagefläche zur Auflage auf dem Bodenpaneel aufweist und eine, zu der Auflagefläche gegenüberliegende Befestigungsfläche, an welcher die Befestigungssäule befestigt ist, auf. Der Befestigungsträger ist an der Auflagefläche angeordnet ist.

Die Auflagefläche liegt in einer Auflageebene, welche parallel mit einer Oberflächenebene des Bodenpaneels ausgebildet ist. Gegenüberliegend zu der Auflagefläche ist die Befestigungsfläche ausgebildet. Die Befestigungsfläche liegt in einer Befestigungsebene, welche parallel zu der Auflagefläche ausgebildet ist und entsprechend beabstandet von dieser vorliegt.

Die erste Drehachse ist insbesondere derart ausgebildet, dass diese orthogonal zu einer Normalen der Auflageebene ist. Dadurch dreht sich das Einklinkelement somit aus der Auflageebene hinaus oder hinein. Der Befestigungsträger, welcher an der Auflagefläche angeordnet ist, ragt von der Auflagefläche gegenüberliegend zu der Richtung zu der Befestigungsfläche hinaus. Somit, wenn die Auflagefläche auf dem Befestigungspaneel aufliegt, ragt der Befestigungsträger am Rand eines Paneels oder zwischen zwei benachbarten Paneelen hindurch, sodass das Einklinkelement in einem unter dem Bodenpaneel angeordnetem Trägerprofil der Trägervorrichtung des Schalungssystems eingreifen kann.

Der Koppelhebel ist insbesondere an der Sicherungssäule oder dem Standfußelement drehbar befestigt und verläuft entlang der Befestigungsfläche. Das Einklinkelement weist einen Koppelbereich auf, welcher von dem Befestigungsträger durch das Standfußelement verläuft und von der Befestigungsfläche hervorragt. An diesen Koppelbereich wird der Koppelhebel um eine dritte Drehachse drehbar angekoppelt.

Somit kann mittels eines induzierten Schwenkens des Koppelhebels ein schwenken des Befestigungshaken gesteuert werden, da die dritte Drehachse beabstandet zu der ersten Drehachse, um welche sich das Einklinkelement relativ zu dem Befestigungsträger dreht, angeordnet ist.

Die dritte Drehachse ist insbesondere parallel zu der ersten Drehachse und mit einem bestimmten Radius bzw. Abstand beabstandet von dieser angeordnet.

Der Koppelhebel oder der Befestigungshebel kann rein mechanisch, beispielsweise mittels eines Seilzugsystems oder einer Zugstange, wie unten erläutert, betätigt werden. Alternativ kann ferner ein hydraulischer pneumatischer oder elektrischer Antriebsmotor eingesetzt werden.

Gemäß einer weiteren beispielhaften Ausführungsform weist der Befestigungsmechanismus ferner ein Zugelement zum Betätigen des Koppelhebels auf. Das Zugelement erstreckt sich beispielsweise von dem Koppelhebel entlang der Sicherungssäule. Damit kann an einer Bedienposition entfernt von dem Koppelhebel und somit dem Standfußelement das Einklinkelement bedient werden. Es ist damit nicht notwendig, dass der Monteur in einer gebückten Position das Einklinkelement zwischen der Freigabeposition und der Sicherungsposition bewegt. Damit wird eine ergonomisch günstig bedienbare Sicherungsvorrichtung gewährleistet.

Alternativ kann das Zugelement auch direkt am Befestigungshaken angebracht werden.

Das Zugelement kann beispielsweise als ein Zugseil bestehend aus Naturfasern oder aus Metall hergestellt sein. In einer weiteren beispielhaften Ausführungsform weist das Zugelement eine Steuerstange auf, welche an den Koppelhebel derart gekoppelt ist, dass mittels Steuerns des Koppelhebels das Einklinkelement zwischen der Sicherungsposition und der Freigabeposition bewegbar ist.

Mittels Einsatzes der Steuerstange kann eine bidirektionale Kraftübertragung umgesetzt werden. Die Steuerstange kann insbesondere um eine weitere Drehachse schwenkbar an dem Koppelhebel angeordnet werden, wobei die weitere Drehachse beabstandet von der dritten Drehachse und der zweiten Drehachse ausgebildet wird.

Gemäß einer weiteren beispielhaften Ausführungsform weist der Befestigungsmechanismus ein Schiebeelement auf, welches entlang der Sicherungssäule in Richtung des Standfußelements verschiebbar angeordnet ist. Das Zugelement ist an dem Schiebelement befestigt.

Das Schiebeelement bildet somit beispielsweise eine Manschette aus, welche voll oder teilumfänglich die Sicherungssäule umschließt. Beispielsweise kann an der Sicherungssäule ebenfalls eine Führungsschiene angeordnet werden, entlang welcher das Schiebeelement verfahren werden kann. Somit wird eine einfache und robuste Bedienoption der Sicherungsvorrichtung geschaffen, da das Zugelement translatorische geführt wird und nicht freibewegbar an der Sicherungssäule vorliegt. Somit wird eine sichere und einfache Bedienung der Sicherungsvorrichtung gewährleistet.

Gemäß einer weiteren beispielhaften Ausführungsform weist das Schiebeelement einen Greifbereich, insbesondere einen Greifbügel, zum Greifen und Bedienen des Schiebelements auf.

Gemäß einer weiteren beispielhaften Ausführungsform weist der Befestigungsmechanismus einen Übertragungshebel auf, welcher um eine vierte Drehachse drehbar an dem Koppelhebel drehbar befestigt ist und beabstandet zu der vierten Drehachse die dritte Drehachse aufweist.

Der Übertragungshebel bildet sozusagen einen Zwischenhebel zwischen dem Koppelhebel und dem Befestigungshaken. Bei Schwenken des Koppelhebels wird der Übertragungshebel mitgezogen und dreht daraufhin das Einklinkelement um die erste Drehachse.

Die zweite Drehachse, die dritte Drehachse und die vierte Drehachse sind insbesondere an der Befestigungsfläche beabstandet angeordnet. Ferner können die zweite Drehachse, die dritte Drehachse und die vierte Drehachse parallel zueinander angeordnet sein.

Gemäß einer weiteren beispielhaften Ausführungsform sind der Koppelhebel, der Übertragungshebel und das Einklinkelement derart ausgebildet und zueinander angeordnet, dass in der Sicherungsposition die zweite Drehachse , und die dritte Drehachse auf einer gemeinsamen Verbindungslinie liegen und die vierte Drehachse auf oder zwischen der Verbindungslinie und der Befestigungsfläche liegt, sodass eine Rotation des Einklinkelements um die erste Drehachse (in Richtung Öffnungsstellung bzw. Freigabeposition) blockiert ist. Somit wird eine Art Kniehebelmechanik geschaffen und umgesetzt.

Befinden sich die zweite Drehachse, die dritte Drehachse und die vierte Drehachse auf (bzw. die vierte Drehachse auf oder unter) einer gemeinsamen Verbindungslinie, wobei die Verbindungslinie insbesondere orthogonal zu den jeweiligen Drehachsen verläuft, so bewirkt eine Drehung des Einklinkelements um die erste Drehachse, dass eine Tangentialkraft aufgrund des Schwenkens des Einklinkelements auf die dritte Drehachse wirkt und entsprechend entlang der Verbindungslinie verläuft. Insbesondere, da die Verbindungslinie die zweite dritte und ggf. die vierte Drehachse verbindet, bildet die induzierte Tangentialkraft eine Radialkraft, welche auf die entsprechenden Drehachse wirkt, ohne dass Tangentialkräfte relativ zu den Drehachsen entsteht. Somit wird ein Verschwenken des Koppelhebels, des Übertragungshebels und entsprechend des Einklinkelements unterbunden. Befindet sich die vierte Drehachse unter der Verbindungslinie, d.h. zwischen der Befestigungsfläche und der Verbindungslinie, so kann die vierte Drehachse nur so lange verschoben werden, bis die vierte Drehachse die Befestigungsfläche berührt und eine weitere Bewegung und somit Öffnung des Einklinkelements blockiert wird.

Sofern mittels des Zugelements das Koppelelement nicht aktiv verschwenkt wird, kann ausgehend von dem Befestigungshaken kein Verschwenken desselben und entsprechend der Koppelstange und des Übertragungshebels erzeugt werden. Damit wird konstruktiv eine Verstellsicherung des Einklinkelements bereitgestellt, sodass dieser nicht ungewollt von der Sicherungsposition in die Freigabeposition verschwenkt werden kann.

Alternativ oder zusätzlich können zusätzlich Sicherungselemente, wie beispielsweise Sicherungsklemmen, ein Rastgelenke oder Sicherungspins verwendet werden, um ein ungewolltes Verschwenken der Elemente des Befestigungsmechanismuses zu verhindern.

Gemäß einer weiteren beispielhaften Ausführungsform weist der Befestigungsmechanismus ein Federelement auf, welches derart an das Einklinkelement gekoppelt ist, dass das Einklinkelement in der Sicherungsposition vorgespannt ist. Befindet sich somit das Einklinkelement in der Freigabeposition, so bewirkt die Federkraft des Federelements permanent eine Verstellkraft des Einklinkelements in Richtung Sicherungsposition. Somit wird das Risiko eines ungewollten lösen der Sicherungsvorrichtung reduziert.

Gemäß einer weiteren beispielhaften Ausführungsform weist der Befestigungsmechanismus ein weiteres Einklinkelement (z.B. Befestigungshaken) auf, welcher an dem Befestigungsträger derart fixiert ist, dass des weiteren Einklinkelements an das Schalungssystem koppelbar ist, wobei das Einklinkelement relativ zu dem weiteren Einklinkelement derart beabstandet angeordnet ist, dass bei einer Einstellung des Einklinkelements relativ zu dem weiteren Einklinkelement ein Abstand zwischen dem Befestigungshaken und dem weiteren Einklinkelement einstellbar ist.

Somit kann mittels Betätigens bzw. Schwenkens des Befestigungshaken das Schalungssystem, und insbesondere das Trägerprofil zwischen dem Einklinkelement und dem weiteren Einklinkelement in der Sicherungsposition eingeklemmt werden. Dies bietet eine einfache erstellbare und sichere Fixierung der Sicherungsvorrichtung mit dem Schalungssystem.

Es wird darauf hingewiesen, dass die hier beschriebenen Ausführungsformen lediglich eine beschränkte Auswahl an möglichen Ausführungsvarianten der Erfindung darstellen. So ist es möglich, die Merkmale einzelner Ausführungsformen in geeigneter Weise miteinander zu kombinieren, so dass für den Fachmann mit den hier expliziten Ausführungsvarianten eine Vielzahl von verschiedenen Ausführungsformen als offensichtlich offenbart anzusehen sind. Insbesondere sind einige Ausführungsformen der Erfindung mit Vorrichtungsansprüchen und andere Ausführungsformen der Erfindung mit Verfahrensansprüchen beschrieben. Dem Fachmann wird jedoch bei der Lektüre dieser Anmeldung sofort klar werden, dass, sofern nicht explizit anders angegeben, zusätzlich zu einer Kombination von Merkmalen, die zu einem Typ von Erfindungsgegenstand gehören, auch eine beliebige Kombination von Merkmalen möglich ist, die zu unterschiedlichen Typen von Erfindungsgegenständen gehören.

### Kurze Beschreibung der Zeichnungen

Im Folgenden werden zur weiteren Erläuterung und zum besseren Verständnis der vorliegenden Erfindung Ausführungsbeispiele unter Bezugnahme auf die beigefügten Zeichnungen näher beschrieben. Es zeigen:
Fig. 1 eine schematische Darstellung einer Sicherungsvorrichtung, welche in einer Freigabeposition auf einem Paneel eines Schalungssystems aufliegt, gemäß einer beispielhaften Ausführungsform der vorliegenden Erfindung,
Fig. 2 eine schematische Darstellung einer Sicherungsvorrichtung, welche in einer Sicherungsposition auf einem Paneel eines Schalungssystems aufliegt, gemäß einer beispielhaften Ausführungsform der vorliegenden Erfindung,
Fig. 3 eine vergrößerte Darstellung des Befestigungsmechanismus in Freigabeposition aus Fig.1,
Fig. 4 eine vergrößerte Darstellung des Befestigungsmechanismus in Sicherungsposition aus Fig.2,
Fig. 5 eine perspektivische Darstellung der Sicherungsvorrichtung gemäß einer beispielhaften Ausführungsform der vorliegenden Erfindung, und
Fig. 6 eine perspektivische Darstellung der Sicherungsvorrichtung, welche auf Bodenpaneelen eines Schalungssystems angeordnet ist, gemäß einer beispielhaften Ausführungsform der vorliegenden Erfindung.

### Detaillierte Beschreibung von exemplarischen Ausführungsformen

Gleiche oder ähnliche Komponenten in unterschiedlichen Figuren sind mit gleichen Bezugsziffern versehen. Die Darstellungen in den Figuren sind schematisch.

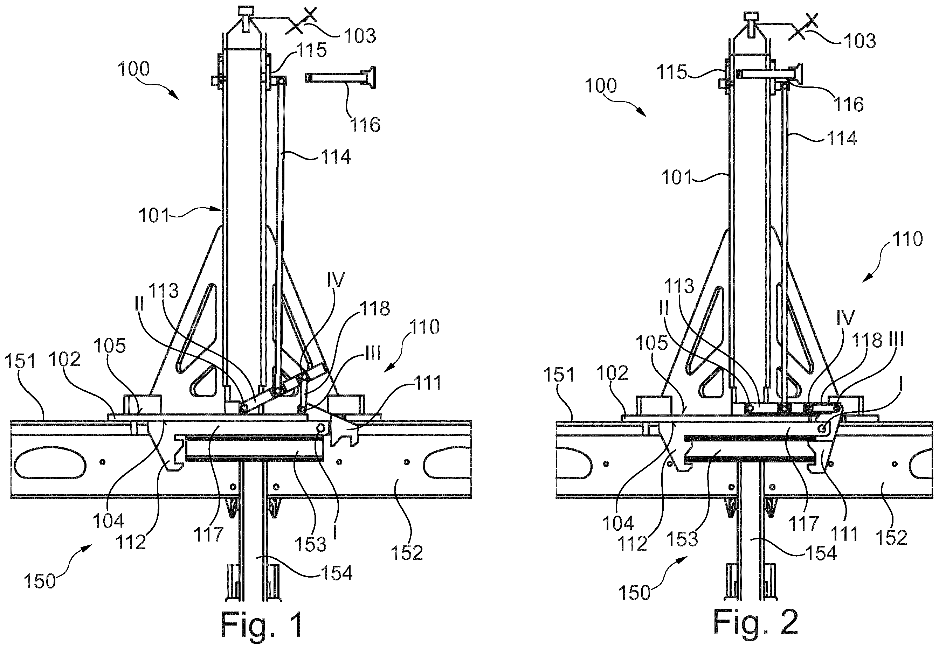

**Fig. 1** und **Fig. 2** zeigen schematische Darstellungen einer Sicherungsvorrichtung100 zum Sichern einer Person an einem Bodenpaneel 151 eines Schalungssystems 150. In Fig. 1 wird die Sicherungsvorrichtung 100 in einer Freigabeposition dargestellt und in Fig. 2 wird die Sicherungsvorrichtung 100 in einer Sicherungsposition dargestellt.

Die Sicherungsvorrichtung 100 weist eine Sicherungssäule 101 und ein Standfußelement 102, welches an der Sicherungssäule 101 befestigt ist, auf. Das Standfußelement 102 ist auf dem Bodenpaneel bzw. Deckenpaneel 151 des Schalungssystems 150 auflegbar. Die Sicherungssäule 101 weist ein Personensicherungselement 103 auf, an welchem die Person selektiv befestigbar ist. Die Sicherungsvorrichtung 100 weist ferner einen Befestigungsmechanismus 110 mit einem Befestigungsträger 117 auf, an welchem zumindest ein Befestigungshaken 111 angeordnet ist. Der Befestigungsträger 117 ist an dem Standfußelement 102 gekoppelt. Das Einklinkelement ist in den beispielhaften Ausführungsformen als Befestigungshaken ausgebildet. Der Befestigungshaken 111 ist in eine Sicherungsposition (Fig. 2) und eine Freigabeposition (Fig. 1) einstellbar, wobei der Befestigungshaken 111 in der Sicherungsposition mit dem Schalungssystem 150 einklinkbar ist, um das Standfußelement 102 auf dem Bodenpaneel 151 zu fixieren, und wobei der Befestigungshaken 111 in der Freigabeposition von dem Schalungssystem 150 entkoppelbar ist, um das Standfußelement 102 von dem Bodenpaneel 151 zu entkoppeln.

Das Schalungssystem 100 dient zum Bilden einer Form zum Gießen von Betonwänden und insbesondere von Betondecken. Das Schalungssystem 100 ist in Fig. 1 und Fig. 2 als Deckenschalungssytem dargestellt. Das Schalungssystem 100 weist dabei insbesondere eine Trägervorrichtung 152 auf, an welcher Bodenpaneele 151 befestigbar sind. Die Trägervorrichtung 152 ist dabei derart ausgebildet, dass diese schnell und einfach auf und abgebaut werden kann und sich zusätzlich an unterschiedliche Flächenformen anpassen kann. Beispielsweise besteht das Schalungssystem 150 aus der Trägervorrichtung 152, welche beispielsweise Querträger aufweist, auf welchen die Bodenpaneele 151 aufgelegt werden. Die Querträger werden über Bodenstützen 154 in einer gewünschten Höhe gehalten. Zwischen den Bodenpaneelen 151 werden an den Stützen 154 Trägerprofile 153 angeordnet. Die Stützen 154 werden jeweils mit einem definierten Rastermaß verteilt aufgestellt.

Die Sicherungssäule 101 ist an dem Standfußelement 102 fixiert. Das Standfußelement 102 liegt auf dem Bodenpaneel 151 auf. Mittels des Befestigungsmechanismus 110 wird das Standfußelement 102 an dem Schalungssystem 150 befestigt, sodass ein Umkippen der Sicherungssäule 101 verhindert wird. Die Sicherungssäule 101 erstreckt sich von dem Standfußelement 102 insbesondere in vertikaler Richtung, wenn das Standfußelement 102 auf dem Bodenpaneel 151 aufliegt.

Die Sicherungssäule 101 weist ferner ein Personensicherungselement 103 auf, an welchen die Person/Monteur selektiv und lösbar befestigbar ist. Das Personensicherungselement 103 ist beispielsweise eine Öse oder ein Haken, an welchem der Monteur direkt oder mittels eines Sicherungsgeräts an der Sicherungssäule 101 befestigt werden kann. Das Personensicherungselement ist insbesondere rotierbar an der Sicherungssäule 101 angeordnet.

Die Sicherungssäule 101 weist beispielsweise eine Längserstreckungsrichtung auf, um welche das Personensicherungselement 103 drehbar angeordnet ist. Somit kann die Person, welche mit dem Personensicherungselement 103 verbunden ist um die Säule 101 laufen, wobei das Personensicherungselement 103 mit rotiert. Die Sicherungssäule 101 weist beispielsweise eine Erstreckungslänge von 1 Meter bis 2 Meter auf.

Der Befestigungsmechanismus 110 ist an dem Standfußelement 102 fixiert. Der Befestigungsträger 117 des Befestigungsmechanismus 110 weist den Befestigungshaken 111 auf, welcher an das Schalungssystem 150 und insbesondere an dem oben beschriebenen Trägerprofil 153 verhakt bzw. eingeklinkt ist. Der Haken 111 kann in dem vorliegenden Ausführungsbeispiel relativ zu dem Befestigungsträger 117 rotatorisch verschwenkt oder translatorisch verschoben werden, um zwischen der Sicherungsposition und der Freigabeposition eingestellt zu werden.

Der Befestigungshaken 111 ist in der Sicherungsposition mit dem Schalungssystem 150 eingeklinkt, derart, dass eine sichere form- und kraftschlüssige Verankerung des Standfußelements 102 auf dem Bodenpaneel 151 generiert wird. Insbesondere ist zwischen zwei benachbarten Bodenpaneelen 151 ein Spalt vorgesehen, durch welchen der Befestigungshaken 111 hindurch ragen kann, um in ein unter dem Bodenpaneel 151 vorliegendes Trägerprofil 153 einzuhaken bzw. einzuklinken.

Der Befestigungshaken 111 ist ferner insbesondere in die Freigabeposition bewegbar, in welcher der Befestigungshaken 111 die form- und kraftschlüssige Verbindung mit dem Trägerprofil 153 auflöst (siehe Fig. 1), sodass die Sicherungsvorrichtung 100 an einen anderen gewünschten Ort deplatziert werden kann.

Der Befestigungshaken 111 ist um eine erste Drehachse I schwenkbar an dem Befestigungsträger 117 befestigt. Der Befestigungshaken 111 kann somit zwischen der Sicherungsposition und der Freigabeposition schwenken.

Das Standfußelement 102 weist eine Auflagefläche 104 zur Auflage auf dem Bodenpaneel 151 und eine, zu der Auflagefläche 104 gegenüberliegende Befestigungsfläche 105, an welcher die Befestigungssäule 101 befestigt ist, auf. Der Befestigungsträger 117 ist an der Auflagefläche 104 angeordnet ist.

Die Auflagefläche 104 liegt in einer Auflageebene, welche parallel mit einer Oberflächenebene des Bodenpaneels 151 ausgebildet ist. Gegenüberliegend zu der Auflagefläche 104 ist die Befestigungsfläche 105 ausgebildet. Die Befestigungsfläche 105 liegt in einer Befestigungsebene, welche parallel zu der Auflagefläche 104 ausgebildet ist und entsprechend beabstandet von dieser vorliegt.

Der Befestigungsträger 117, welcher an der Auflagefläche 104 angeordnet ist, ragt von der Auflagefläche 104 gegenüberliegend der Richtung zu der Befestigungsfläche 105 hinaus. Somit, wenn die Auflagefläche auf dem Befestigungspaneel 151 aufliegt, ragt der Befestigungsträger 117 am Rand eines Paneels 151 hindurch, sodass der Befestigungshaken 111 in einem unter dem Bodenpaneel 151 angeordnetem Trägerprofil 153 der Trägervorrichtung 152 des Schalungssystems 150 eingreifen kann.

Der Befestigungsmechanismus 110 weist ferner einen Koppelhebel 113 auf, welcher um eine zweite Drehachse II an der Sicherungssäule 101 drehbar befestigt ist und um eine dritte Drehachse III, welche beabstandet zu der ersten Drehachse I ausgebildet ist, an dem Befestigungshaken 111 drehbar befestigt ist, derart, dass mittels Drehens des Koppelhebels 113 um die zweite Drehachse II der Befestigungshaken 111 um die erste Drehachse I drehbar ist.

Der Koppelhebel 113 ist insbesondere an der Sicherungssäule 101 oder dem Standfußelement 102 drehbar befestigt und verläuft entlang der Befestigungsfläche 105. Der Befestigungshaken 111 weist einen Koppelbereich auf, welcher von dem Befestigungsträger 117 durch das Standfußelement 102 verläuft und von der Befestigungsfläche 104 hervorragt. An diesen Koppelbereich wird der Koppelhebel 113 bzw. ein Übertragungshebel 118 um eine dritte Drehachse III drehbar angekoppelt.

Somit kann mittels eines induzierten Schwenkens des Koppelhebels ein Schwenken des Befestigungshakens 111 gesteuert werden, da die dritte Drehachse III beabstandet zu der ersten Drehachse I, um welche sich der Befestigungshaken 111 relativ zu dem Befestigungsträger 117 dreht, angeordnet ist.

Die dritte Drehachse III ist insbesondere parallel zu der ersten Drehachse I und mit einem bestimmten Radius beabstandet von dieser angeordnet.

Der Koppelhebel 113 wird mechanisch mit einem Zugelement 114 bzw. einer Zugstange 114 betätigt. Die Zugstange 114 erstreckt sich beispielsweise von dem Koppelhebel 113 entlang der Sicherungssäule 101. Damit kann an einer Bedienposition entfernt von dem Koppelhebel 113 und somit dem Standfußelement 102 der Befestigungshaken 111 bedient werden. Es ist damit nicht notwendig, dass der Monteur in einer gebückten Position den Befestigungshaken 111 zwischen der Freigabeposition und der Sicherungsposition bewegt. Damit wird eine ergonomisch günstig bedienbare Sicherungsvorrichtung gewährleistet.

Mittels Einsatzes der Steuerstange 114 wird eine bidirektionale Kraftübertragung umgesetzt. Die Steuerstange 114 ist insbesondere um eine weitere Drehachse schwenkbar an dem Koppelhebel 113 angeordnet, wobei die weitere Drehachse beabstandet von der dritten Drehachse III und der zweiten Drehachse II ausgebildet wird.

Der Befestigungsmechanismus 110 weist ferner ein Schiebeelement 115 auf, welches entlang der Sicherungssäule 101 in Richtung des Standfußelement 102 verschiebbar angeordnet ist. Die Steuerstange 114 ist an dem Schiebeelement 115 befestigt.

Das Schiebeelement 115 bildet somit beispielsweise eine Manschette aus, welche voll oder teilumfänglich die Sicherungssäule 101 umschließt. Somit wird eine einfache und robuste Bedienoption der Sicherungsvorrichtung 100 geschaffen, da das Zugelement 114 translatorisch geführt wird und nicht frei bewegbar von der Sicherungssäule 101 vorliegt. Die Manschette weist beispielsweise eine Bohrung auf durch welche ein Sicherungsbolzen 116 quer zur Bewegungsrichtung der Manschette entlang der Sicherungssäule 101 hineingesteckt werden kann, um die Manschette bzw. das Schiebeelement 115 gegen ungewolltes Verschieben zu sichern. Ein Lösen bzw. Betätigen des Schiebeelements 115 erfordert somit zwei unterschiedliche Bewegungsabläufe: a) das Herausziehen des Sicherungsbolzens 116 und b) das Verschieben des Schiebeelements 115 entlang der Sicherungssäule 101. Dies erhöht die Sicherheit vor einer ungewollten Betätigung des Schiebeelements 115. Der Sicherungsbolzen 116 kann ferner mittels eines Schließsystems (z.B. mit einem Vorhängeschloss) gesichert werden, um ein ungewolltes Lösen des Sicherungsbolzens 116 zu verhindern.

Der Befestigungsmechanismus 110 weist einen weiteren Befestigungshaken 112 auf, welcher an dem Befestigungsträger 117 derart fixiert ist, dass der weitere Befestigungshaken 112 an das Schalungssystem 150 koppelbar ist, wobei der Befestigungshaken 111 relativ zu dem weiteren Befestigungshaken 112 derart beabstandet angeordnet ist, dass bei einer Einstellung bzw. Verschwenkung des Befestigungshakens 111 relativ zu dem weiteren Befestigungshaken 112 ein Abstand zwischen dem Befestigungshaken 111 und dem weiteren Befestigungshaken 112 einstellbar ist. Somit wird mittels Schwenkens des Befestigungshakens 111 das Schalungssystem 150, und insbesondere das Trägerprofil 153, zwischen dem Befestigungshaken 111 und dem weiteren Befestigungshaken 112 in der Sicherungsposition eingeklemmt. Dies bietet eine einfache erstellbare und sichere Fixierung der Sicherungsvorrichtung 100 mit dem Schalungssystem 150.

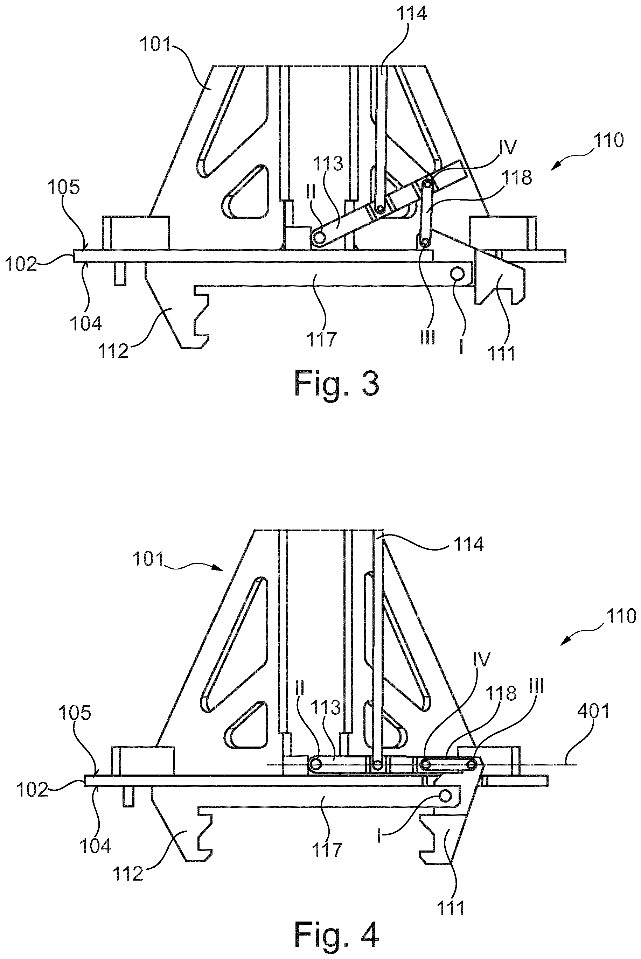

**Fig. 3** zeigt eine vergrößerte Darstellung des Befestigungsmechanismus 110 in Freigabeposition aus Fig.1 und **Fig. 4** zeigt eine vergrößerte Darstellung des Befestigungsmechanismus 110 in Sicherungsposition aus Fig.2. Im Folgenden wird die bevorzugte Ausführungsform des Befestigungsmechanismus 110 aufweisend den Befestigungshaken 111, den Koppelhebel 113 und den Übertragungshebel 118 genauer beschrieben.

Der Übertragungshebel 118 ist um eine vierte Drehachse IV drehbar an dem Koppelhebel 113 drehbar befestigt ist und weist beabstandet zu der vierten Drehachse IV die dritte Drehachse III auf. Der Übertragungshebel 118 bildet sozusagen einen Zwischenhebel zwischen dem Koppelhebel 113 und dem Befestigungshaken 111.

Beim Schwenken des Koppelhebels 113 wird der Übertragungshebel 118 mitgezogen und dreht daraufhin den Befestigungshaken 111 um die erste Drehachse I. Die zweite Drehachse II, die dritte Drehachse III und die vierte Drehachse IV sind insbesondere von der Befestigungsfläche 105 beabstandet angeordnet. Ferner sind die zweite Drehachse II, die dritte Drehachse III und die vierte Drehachse IV parallel zueinander angeordnet sein.

Der Koppelhebel 113, der Übertragungshebel 118 und der Befestigungshaken 111 sind derart ausgebildet und zueinander angeordnet, dass in der Sicherungsposition die zweite Drehachse II und die dritte Drehachse III auf einer gemeinsamen Verbindungslinie 401 liegen (und die vierte Drehachse IV leicht unterhalb der Verbindungslinie 401, d.h. zwischen der Verbindungslinie und der Befestigungsfläche 105 liegt), sodass eine Rotation des Befestigungshakens 111 um die erste Drehachse I (bei Einwirkung einer Kraft auf den Befestigungshaken 111 in Öffnungsrichtung) blockiert ist. Befinden sich die zweite Drehachse II, die dritte Drehachse III und die vierte Drehachse IV auf einer gemeinsamen Verbindungslinie 401, wobei die Verbindungslinie 401 insbesondere orthogonal zu den jeweiligen Drehachsen II, III, IV verläuft, so bewirkt eine Drehung des Befestigungshakens 401 um die erste Drehachse I das eine Tangentialkraft aufgrund des Schwenkens des Befestigungshakens 111 auf die dritte Drehachse III wirkt und entsprechend entlang der Verbindungslinie 401 verläuft. Insbesondere, da die Verbindungslinie 401 die zweite, dritte und vierte Drehachse II, III, IV verbindet, bildet die induzierte Tangentialkraft eine Radialkraft, welche auf die entsprechenden Drehachse II, III, IV wirkt, ohne dass Tangentialkräfte relativ zu den Drehachsen II, III, IV entstehen. Somit wird ein Verschwenken des Koppelhebels 113, des Übertragungshebels 118 und entsprechend des Befestigungshakens 111 unterbunden.

Sofern mittels des Zugelements 114 das Koppelelement 113 nicht aktiv verschwenkt wird, kann ausgehend von dem Befestigungshaken 111 kein Verschwenken desselben und entsprechend der Koppelstange 114 und des Übertragungshebels 118 erzeugt werden. Damit wird konstruktiv eine Verstellsicherung des Befestigungshakens 111 bereitgestellt, sodass dieser nicht ungewollt von der Sicherungsposition in die Freigabeposition verschwenkt werden kann.

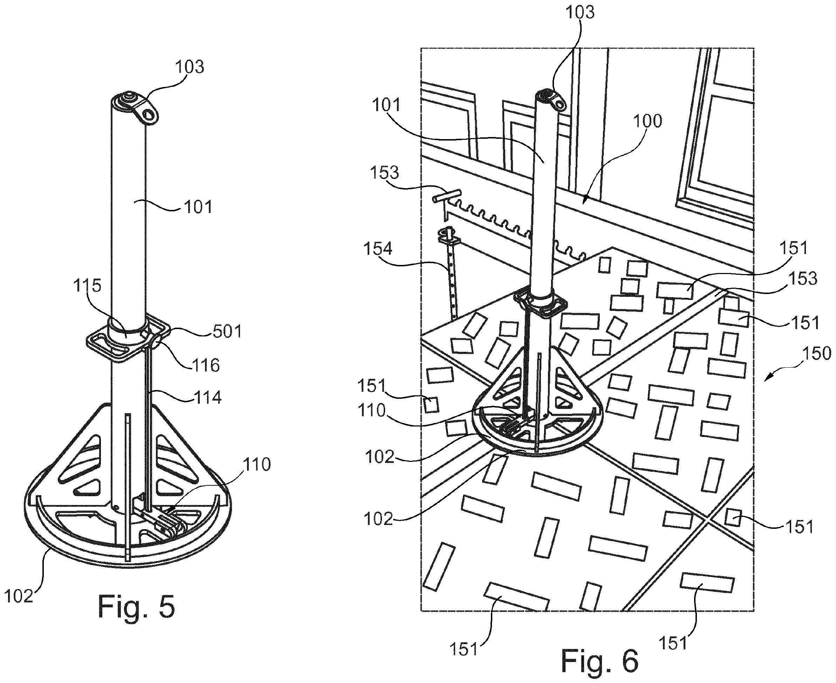

**Fig. 5** zweigt eine perspektivische Darstellung der Sicherungsvorrichtung 100 beispielsweise aus Fig. 1 bis Fig. 4. Das Standfußelement 102 ist als runde Platte ausgebildet, um eine ausreichende Standstabilität zu gewährleisten. Mit anderen Worten kann das Standfußelement 202 als Druckplatte ausgebildet werden, um eine homogene Druckverteilung und Aufnahme eines Moments bei einem Sturz des Monteurs aufzufangen.

Das Schiebeelement 115 weist einen Greifbereich 501, insbesondere einen Greifbügel, zum Greifen und Bedienen des Schiebelements 115 auf.

**Fig. 6** zeigt eine perspektivische Darstellung der Sicherungsvorrichtung 100, welche auf Bodenpaneelen 151 eines Schalungssystems 150 angeordnet ist. Die Trägerprofile 153 weisen sogenannte Konsolenköpfe auf, in welchem Traverse (Querverstrebungen) eingelegt werden, auf welchen wiederum die Bodenpaneele 151 aufgelegt werden. Die Trägerprofile 153 sind dabei insbesondere derart ausgebildet, dass sich der Befestigungshaken 111 der Sicherungsvorrichtung 100 darin verklinkt bzw. einhakt. Das Trägerprofil ist z.B. ein Vierkant-Hohlprofil. Insbesondere ist zwischen zwei benachbarten Bodenpaneelen 151 ein Spalt vorgesehen, durch welchen der Befestigungshaken 111 hindurch ragen kann, um in ein unter dem Bodenpaneel 151 vorliegendes Trägerprofil 153 einzuhaken bzw. einzuklinken.

Auf dem Bodenpaneel 151 kann der Monteur sich fortbewegen. Gleichzeitig dienen die Bodenpaneele 151 als Teil der Gussform für den Beton. Nach Aushärten des Betons können die Bodenpaneele 151 in einfacher Art und Weise demontiert werden.

Zur Sicherung des Monteurs während des Montierens der Bodenpaneele 151 wird die Sicherungsvorrichtung 100 an gewünschten Stellen der Schalungsvorrichtung 150 lösbar fixiert, um damit den Monteur vor einem Absturz von dem Schalungssystem 150 zu schützen.

Ergänzend ist darauf hinzuweisen, dass "umfassend" keine anderen Elemente oder Schritte ausschließt und "eine" oder "ein" keine Vielzahl ausschließt. Ferner sei darauf hingewiesen, dass Merkmale oder Schritte, die mit Verweis auf eines der obigen Ausführungsbeispiele beschrieben worden ist, auch in Kombination mit anderen Merkmalen oder Schritten anderer oben beschriebener Ausführungsbeispiele verwendet werden können. Bezugszeichen in den Ansprüchen sind nicht als Einschränkung anzusehen.

### Bezugszeichenliste:

- 100: Sicherungsvorrichtung
- 101: Sicherungssäule
- 102: Standfußelement
- 103: Personensicherungselement
- 104: Auflagefläche
- 105: Befestigungsfläche

- 110: Befestigungsmechanismus
- 111: Einklinkelement, Befestigungshaken
- 112: weiterer Befestigungshaken
- 113: Koppelhebel
- 114: Zugelement/Steuerstange
- 115: Schiebeelement
- 116: Sicherungsbolzen
- 117: Befestigungsträger
- 118: Übertragungshebel

- 150: Schalungssystem
- 151: Bodenpaneel
- 152: Trägervorrichtung
- 153: Trägerprofil
- 154: Stütze

- 401: Verbindungslinie
- 501: Greifbereich

- I: erste Drehachse
- II: zweite Drehachse
- III: dritte Drehachse
- IV: vierte Drehachse

## Patentansprüche

1. Sicherungsvorrichtung (100) zum Sichern einer Person an einem Bodenpaneel (151) eines Schalungssystems (150), die Sicherungsvorrichtung (100) aufweisend:
eine Sicherungssäule (101),
ein Standfußelement (102), welches an der Sicherungssäule (101) befestigt ist,
wobei das Standfußelement (102) auf einem Bodenpaneel (151) eines Schalungssystems (150) auflegbar ist,
wobei die Sicherungssäule (101) ein Personensicherungselement (103) aufweist, an welchem die Person selektiv befestigbar ist, und
einen Befestigungsmechanismus (110), welcher einen Befestigungsträger (117) aufweist, an welchem zumindest ein Einklinkelement (111) angeordnet ist,
wobei der Befestigungsträger (117) an dem Standfußelement (102) gekoppelt ist,
wobei das Einklinkelement (111) in eine Sicherungsposition und eine Freigabeposition einstellbar ist,
wobei das Einklinkelement (111) in der Sicherungsposition mit dem Schalungssystem (150) einklinkbar ist, um das Standfußelement (102) auf dem Bodenpaneel (151) zu fixieren, und
wobei das Einklinkelement (111) in der Freigabeposition von dem Schalungssystem (150) entkoppelbar ist, um das Standfußelement (102) von dem Bodenpaneel (151) zu entkoppeln,
wobei das Einklinkelement (111) um eine erste Drehachse (I) schwenkbar an dem Befestigungsträger befestigt ist,
**dadurch gekennzeichnet, dass** der Befestigungsmechanismus (110) ferner einen Koppelhebel (113) aufweist, welcher um eine zweite Drehachse (II) an der Sicherungssäule (101) drehbar befestigt ist und um eine dritte Drehachse (III), welche beabstandet zu der ersten Drehachse (I) ausgebildet ist, an dem Einklinkelement (111) drehbar befestigt ist, derart, dass mittels Drehens des Koppelhebels (113) um die zweite Drehachse (II) das Einklinkelement (111) um die erste Drehachse (I) drehbar ist.

2. Sicherungsvorrichtung (100) gemäß Anspruch 1,
wobei das Standfußelement (102) eine Auflagefläche (104) zur Auflage auf dem Bodenpaneel (151) aufweist und eine, zu der Auflagefläche (104) gegenüberliegende Befestigungsfläche (105), an welcher die Sicherungssäule (101) befestigt ist, aufweist,
wobei der Befestigungsträger (117) an der Auflagefläche (104) angeordnet ist.

3. Sicherungsvorrichtung (100) gemäß Anspruch 1 oder 2,
wobei der Befestigungsmechanismus (110) ferner ein Zugelement (114) zum Betätigen des Koppelhebels (113) aufweist.

4. Sicherungsvorrichtung (100) gemäß Anspruch 3,
wobei das Zugelement (114) eine Steuerstange aufweist, welche an den Koppelhebel (113) derart gekoppelt ist, dass mittels Steuerns des Koppelhebels (113) das Einklinkelement (111) zwischen der Sicherungsposition und der Freigabeposition bewegbar ist.

5. Sicherungsvorrichtung (100) gemäß Anspruch 3 oder 4,
wobei der Befestigungsmechanismus (110) ein Schiebeelement (115) aufweist, welches entlang der Sicherungssäule (101) in Richtung des Standfußelements (102) verschiebbar angeordnet ist,
wobei das Zugelement (114) an dem Schiebeelement (115) befestigt ist.

6. Sicherungsvorrichtung (100) gemäß Anspruch 5,
wobei das Schiebeelement (115) einen Greifbereich (501), insbesondere einen Greifbügel, zum Greifen und Bedienen des Schiebeelements (115) aufweist.

7. Sicherungsvorrichtung (100) einem der Ansprüche 1 bis 6,
wobei der Befestigungsmechanismus (110) einen Übertragungshebel (118) aufweist, welcher um eine vierte Drehachse (IV) drehbar an dem Koppelhebel (113) drehbar befestigt ist und beabstandet zu der vierten Drehachse (IV) die dritte Drehachse (III) aufweist.

8. Sicherungsvorrichtung (100) gemäß Anspruch 7,
wobei die zweite Drehachse (II), die dritte Drehachse (III) und die vierte Drehachse (IV) an der Befestigungsfläche (105) angeordnet sind.

9. Sicherungsvorrichtung (100) gemäß Anspruch 7 oder 8,
wobei der Koppelhebel (113), der Übertragungshebel (118) und das Einklinkelement (111) derart ausgebildet und zueinander angeordnet sind, dass in der Sicherungsposition die zweite Drehachse (II) und die dritte Drehachse (III) und die vierte Drehachse (IV) auf einer gemeinsamen Verbindungslinie (401) liegen und die vierte Drehachse IV auf oder zwischen der Verbindungslinie 401 und der Befestigungsfläche 105 liegt, sodass eine Rotation des Einklinkelements (111) um die erste Drehachse (I) blockiert ist.

10. Sicherungsvorrichtung (100) gemäß einem der Ansprüche 1 bis 9,
wobei der Befestigungsmechanismus (110) ein Federelement aufweist, welches derart an dem Einklinkelement (111) gekoppelt ist, dass das Einklinkelement (111) in der Sicherungsposition vorgespannt ist.

11. Sicherungsvorrichtung (100) gemäß einem der Ansprüche 1 bis 10,
wobei der Befestigungsmechanismus (110) ein weiteres Einklinkelement (112) aufweist, welcher an dem Standfußelement (102) derart fixiert ist, dass das weitere Einklinkelement (112) an dem Schalungssystem (150) koppelbar ist, wobei das Einklinkelement (111) relativ zu dem weiteren Einklinkelement (112) derart beabstandet angeordnet ist, dass bei einer Einstellung des Einklinkelements (111) relativ zu dem weiteren Einklinkelement (112) ein Abstand zwischen dem Einklinkelement (111) und dem weiteren Einklinkelement (112) einstellbar ist.

12. Schalungssystem (150), aufweisend
ein Bodenpaneel (151),
eine Trägervorrichtung (152), an welcher das Bodenpaneel (151) befestigbar ist, und
eine Sicherungsvorrichtung (100) zum Sichern einer Person an dem Bodenpaneel (151) gemäß einem der Ansprüche 1 bis 11,
wobei das Standfußelement (102) auf dem Bodenpaneel (151) aufgelegt ist, wobei das Einklinkelement (111) in der Sicherungsposition an dem Schalungssystem (150), insbesondere an der Trägervorrichtung (152), eingeklinkt ist, um die Sicherungssäule (101) auf dem Bodenpaneel (151) zu fixieren.

13. Verfahren zum Sichern einer Person an einem Bodenpaneel (151) eines Schalungssystems (150) mit einer Sicherungsvorrichtung (100) gemäß einem der Ansprüche 1 bis 11, das Verfahren aufweisend
Auflegen des Standfußelements (102) auf dem Bodenpaneel (151), und
Einstellen des Einklinkelements (111) in die Sicherungsposition mittels Einklinkens des Einklinkelements (111) mit dem Schalungssystem (150), um das Standfußelement (102) auf dem Bodenpaneel (151) zu fixieren, und
Einstellen des Einklinkelements (111) in die Freigabeposition mittels Entkoppelns des Einklinkelements (111) von dem Schalungssystem (150), um das Standfußelement (102) von dem Bodenpaneel (151) zu lösen.

## Claims

1. Securing apparatus (100) for securing a person to a floor panel (151) of a shuttering system (150), the securing apparatus (100) comprising:
a securing post (101),
a base element (102) that is fastened to the securing post (101),
wherein the base element (102) may be placed on a floor panel (151) of a shuttering system (150),
wherein the securing post (101) comprises a person-securing element (103), to which the person may be selectively fastened, and
a fastening mechanism (110) that comprises a fastening carrier (117), on which at least one latching element (111) is arranged,
wherein the fastening carrier (117) is coupled to the base element (102),
wherein the latching element (111) may be adjusted into a securing position and a release position,
wherein the latching element (111) in the securing position may be latched to the shuttering system (150) in order to fix the base element (102) to the floor panel (151), and
wherein the latching element (111) in the release position may be decoupled from the shuttering system (150) in order to decouple the base element (102) from the floor panel (151),
wherein the latching element (111) is fastened to the fastening carrier so that said latching element may pivot about a first axis of rotation (I),
**characterised in that**
the fastening mechanism (110) further comprises a coupling lever (113), which is fastened to the securing post (101) so that said coupling lever may rotate about a second axis of rotation (II) and which is fastened to the latching element (111) so that said coupling lever may rotate about a third axis of rotation (III), which is spaced from the first axis of rotation (I), in such a manner that may by means of rotating the coupling lever (113) about the second axis of rotation (II) the latching element (111) may be rotated about the first axis of rotation (I).

2. Securing apparatus (100) in accordance with claim 1,
wherein the base element (102) comprises a placement surface (104) for placement on the floor panel (151) and a fastening surface (105) that lies opposite the placement surface (104) and the securing post (101) is fastened to said fastening surface,
wherein the fastening carrier (117) is arranged on the resting surface (104).

3. Securing apparatus (100) in accordance with claim 1 or 2,
wherein the fastening mechanism (110) further comprises a tensile element (114) for actuating the coupling lever (113).

4. Securing apparatus (100) in accordance with claim 3,
wherein the tensile element (114) comprises a control rod that is coupled to the coupling lever (113) in such a manner that the latching element (111) may be moved between the securing position and the release position by means of controlling the coupling lever (113).

5. Securing apparatus (100) in accordance with claim 3 or 4, wherein the fastening mechanism (110) comprises a sliding element (115) that is arranged in such a manner that it may be displaced along the securing post (101) in the direction of the base element (102),
wherein the tensile element (114) is fastened to the sliding element (115).

6. Securing apparatus (100) in accordance with claim 5,
wherein the sliding element (115) comprises a gripping region (501), in particular a gripping handle, for gripping and operating the sliding element (115).

7. Securing apparatus (100) in accordance with any one of claims 1 to 6, wherein the fastening mechanism (110) comprises a transfer lever (118) that is rotatably fastened to the coupling lever (113) so that said transfer lever may rotate about a fourth axis of rotation (IV) and said transfer lever comprises the third axis of rotation (III) that is spaced with respect to the fourth axis of rotation (IV).

8. Securing apparatus (100) in accordance with claim 7,
wherein the second axis of rotation (II), the third axis of rotation (III) and the fourth axis of rotation (IV) are arranged on the fastening surface (105).

9. Securing apparatus (100) in accordance with claim 7 or 8,
wherein the coupling lever (113), the transfer lever (118) and the latching element (111) are embodied and arranged with respect to one another in such a manner that in the securing position the second axis of rotation (II) and the third axis of rotation (III) and the fourth axis of rotation (IV) lie on a common connecting line (401) and the fourth axis of rotation (IV) lies on or between the connecting line (401) and the fastening surface (105) with the result that a rotation of the latching element (111) about the first axis of rotation (I) is blocked.

10. Securing apparatus (100) in accordance with any one of claims 1 to 9, wherein the fastening mechanism (110) comprises a resilient element that is coupled to the latching element (111) in such a manner that in the securing position the latching element (111) is pre-stressed.

11. Securing apparatus (100) in accordance with any one of claims 1 to 10,
wherein the fastening mechanism (110) comprises a further latching element (112) that is fixed to the base element (102) in such a manner that the further latching element (112) may be coupled to the shuttering system (150),
wherein the latching element (111) is arranged spaced relative to the further latching element (112) in such a manner that when the latching element (111) is adjusted relative to the further latching element (112) a spacing may be set between the latching element (111) and the further latching element (112).

12. Shuttering system (150) comprising
a floor panel (151),
a carrier apparatus (152) to which the floor panel (151) may be fastened, and
a securing apparatus (100) for securing a person to the floor panel (151) in accordance with any one of claims 1 to 11,
wherein the base element (102) is placed on the floor panel (151), wherein the latching element (111) in the securing position is latched to the shuttering system (150), in particular to the carrier apparatus (152), in order to fix the securing post (101) on the floor panel (151).

13. Method for securing a person to a floor panel (151) of a shuttering system (150) having a securing apparatus (100) in accordance with any one of claims 1 to 11, the method comprising
placing the base element (102) on the floor panel (151), and
adjusting the latching element (111) into the securing position by means of latching the latching element (111) to the shuttering system (150) in order to fix the base element (102) on the floor panel (151), and adjusting the latching element (111) into the release position by means of decoupling the latching element (111) from the shuttering system (150) in order to release the base element (102) from the floor panel (151).

## Revendications

1. Dispositif de fixation (100) destiné à arrimer une personne à un panneau de plancher (151) d'un système de coffrage (150), le dispositif de fixation (100) comportant :
une colonne de fixation (101),
un élément de socle (102), qui est rattaché à la colonne de fixation (101), l'élément de socle (102) pouvant être posé sur un panneau de plancher (151) d'un système de coffrage (150),
la colonne de fixation (101) comportant un élément d'arrimage de personne (103), auquel la personne peut être rattachée de manière sélective, et
un mécanisme d'attache (110), qui comporte un support d'attache (117), sur lequel est disposé au moins un élément d'encliquetage (111),
le support d'attache (117) étant couplé à l'élément de socle (102),
l'élément d'encliquetage (111) pouvant être réglé dans une position de fixation et une position de libération,
l'élément d'encliquetage (111), dans la position de fixation, pouvant être encliqueté avec le système de coffrage (150), pour fixer l'élément de socle (102) sur le panneau de plancher (151), et
l'élément d'encliquetage (111), dans la position de libération, pouvant être découplé du système de coffrage (150), pour découpler l'élément de socle (102) du panneau de plancher (151),
l'élément d'encliquetage (111) étant rattaché au support d'attache de manière pivotante sur un premier axe de rotation (I),
**caractérisé en ce que** le mécanisme d'attache (110) comporte en outre un levier de couplage (113), qui est rattaché à la colonne de fixation (101) de manière rotative sur un deuxième axe de rotation (II) et est rattaché à l'élément d'encliquetage (111) de manière rotative sur un troisième axe de rotation (III), qui est réalisé espacé du premier axe de rotation (I), de telle manière que l'élément d'encliquetage (111) peut tourner sur le premier axe de rotation (I) au moyen d'une rotation du levier de couplage (113) sur le deuxième axe de rotation (II).

2. Dispositif de fixation (100) selon la revendication 1,
dans lequel l'élément de socle (102) comporte une surface d'appui (104) pour l'appui sur le panneau de plancher (151) et une surface d'attache (105), opposée à la surface d'appui (104), à laquelle la colonne de fixation (101) est rattachée,
dans lequel le support d'attache (117) est disposé sur la surface d'appui (104).

3. Dispositif de fixation (100) selon la revendication 1 ou 2,
dans lequel le mécanisme d'attache (110) comporte en outre un élément de traction (114) pour l'actionnement du levier de couplage (113).

4. Dispositif de fixation (100) selon la revendication 3,
dans lequel l'élément de traction (114) comporte une barre de commande, qui est couplée au levier de couplage (113) de telle manière que l'élément d'encliquetage (111) peut être déplacé entre la position de fixation et la position de libération au moyen de la commande du levier de couplage (113).

5. Dispositif de fixation (100) selon la revendication 3 ou 4,
dans lequel le mécanisme d'attache (110) comporte un élément coulissant (115), qui est disposé coulissant le long de la colonne de fixation (101) en direction de l'élément de socle (102),
l'élément de traction (114) étant rattaché à l'élément coulissant (115).

6. Dispositif de fixation (100) selon la revendication 5,
dans lequel l'élément coulissant (115) comporte une zone de préhension (501), en particulier une anse de préhension, pour saisir et manœuvrer l'élément coulissant (115).

7. Dispositif de fixation (100) selon l'une des revendications 1 à 6,
dans lequel le mécanisme d'attache (110) comporte un levier de transmission (118), qui est rattaché au levier de couplage (113) de manière rotative sur un quatrième axe de rotation (IV) et qui comporte le troisième axe de rotation (III) espacé du quatrième axe de rotation (IV).

8. Dispositif de fixation (100) selon la revendication 7,
dans lequel le deuxième axe de rotation (II), le troisième axe de rotation (III) et le quatrième axe de rotation (IV) sont disposés sur la surface d'attache (105).

9. Dispositif de fixation (100) selon la revendication 7 ou 8,
dans lequel le levier de couplage (113), le levier de transmission (118) et l'élément d'encliquetage (111) sont réalisés et disposés les uns par rapport aux autres de telle manière que, dans la position de fixation, le deuxième axe de rotation (II), le troisième axe de rotation (III) et le quatrième axe de rotation (IV) se trouvent sur une ligne de jonction (401) commune et le quatrième axe de rotation (IV) se trouve sur ou entre la ligne de jonction (401) et la surface d'attache (105), de telle sorte qu'une rotation de l'élément d'encliquetage (111) sur le premier axe de rotation (I) est bloquée.

10. Dispositif de fixation (100) selon l'une des revendications 1 à 9,
dans lequel le mécanisme d'attache (110) comporte un élément formant ressort, qui est couplé de telle manière à l'élément d'encliquetage (111) que l'élément d'encliquetage (111) est précontraint dans la position de fixation.

11. Dispositif de fixation (100) selon l'une des revendications 1 à 10,
dans lequel le mécanisme d'attache (110) comporte un autre élément d'encliquetage (112), qui est fixé à l'élément de socle (102) de telle manière que l'autre élément d'encliquetage (112) peut être couplé au système de coffrage (150), l'élément d'encliquetage (111) étant disposé espacé de l'autre élément d'encliquetage (112) de telle manière que, lors d'un réglage de l'élément d'encliquetage (111) par rapport à l'autre élément d'encliquetage (112), une distance entre l'élément d'encliquetage (111) et l'autre élément d'encliquetage (112) peut être réglée.

12. Système de coffrage (150), comportant
un panneau de plancher (151),
un dispositif de poutre (152), auquel le panneau de plancher (151) peut être rattaché, et
un dispositif de fixation (100) pour arrimer une personne au panneau de plancher (151) selon l'une des revendications 1 à 11,
dans lequel l'élément de socle (102) est posé sur le panneau de plancher (151), dans lequel, dans la position de fixation, l'élément d'encliquetage (111) est encliqueté sur le système de coffrage (150), en particulier sur le dispositif de poutre (152), pour fixer la colonne de fixation (101) sur le panneau de plancher (151).

13. Procédé d'arrimage d'une personne à un panneau de plancher (151) d'un système de coffrage (150) avec un dispositif de fixation (100) selon l'une des revendications 1 à 11, le procédé comportant
la pose de l'élément de socle (102) sur le panneau de plancher (151), et
le réglage de l'élément d'encliquetage (111) dans la position de fixation au moyen de l'encliquetage de l'élément d'encliquetage (111) avec le système de coffrage (150) pour fixer l'élément de socle (102) sur le panneau de plancher (151), et
le réglage de l'élément d'encliquetage (111) dans la position de libération au moyen du découplage de l'élément d'encliquetage (111) d'avec le système de coffrage (150) pour détacher l'élément de socle (102) du panneau de plancher (151).
